# EUROPÄISCHE PATENTSCHRIFT

(11) **EP 3 601 925 B1**
(45) Veröffentlichungstag und Bekanntmachung des Hinweises auf die Patenterteilung: **05.07.2023**
(21) Anmeldenummer: 18713797.1
(22) Anmeldetag: 05.03.2018
(51) Int. Cl.: F28F 1/40, B01J 19/00, F28F 3/02, F28F 5/04, F28F 5/06, F28F 13/00, F28F 13/12, F28D 1/06, F28D 11/02, F28D 11/08, F28F 1/12, F28D 1/02

(54) **REAKTIONSVORRICHTUNG MIT WÄRMETAUSCHER UND DEREN VERWENDUNG**
REACTION DEVICE WITH HEAT EXCHANGER AND USE THEREOF
DISPOSITIF DE RÉACTION COMPRENANT UN ÉCHANGEUR DE CHALEUR ET SON UTILISATION

(30) Priorität: 24.03.2017 DE 102017205020
(43) Veröffentlichungstag der Anmeldung: 05.02.2020
(73) Patentinhaber: Fraunhofer-Gesellschaft zur Förderung der angewandten Forschung e.V., 80686 München (DE)
(72) Erfinder: HORNUNG, Andreas, 76185 Karlsruhe (DE); AIGNER, Jonathan, 92224 Amberg (DE); HENSE, Peter, 59510 Lippetal (DE); PEDRAZZINI, Alberto, 29015 Castel San Giova (IT); HORNUNG, Thorsten, 85551 Kirchheim (DE)
(74) Vertreter: Friese Goeden Patentanwälte PartGmbB
(86) Internationale Anmeldenummer: PCT/EP2018/055325
(87) Internationale Veröffentlichungsnummer: WO 2018/172048

(56) Entgegenhaltungen:
- EP-A1- 0 012 410
- EP-A2- 2 307 824
- CA-A- 1 157 632
- DE-A1-102010 041 956
- US-A1- 2009 229 798

## Beschreibung

Die Erfindung betrifft eine Reaktionsvorrichtung mit einer Außenwand, die einen Innenraum definiert, in dem sich ein Rührwerk befindet, wobei die Reaktionsvorrichtung weiterhin einen Wärmetauscher mit einer Gitterstruktur aufweist. Damit ist es möglich, zielgenau und effizient Wärme vor allem mittels Wärmestrahlung in endothermen Prozessen unterschiedlicher Temperaturniveaus, insbesondere Pyrolyse, Vergasung und Reforming, zu transportieren und dabei die Abwärme anderer Prozesse zu nutzen.

Sowohl in der thermischen als auch thermo-chemischen Konversion von Biomasse und ähnlichen organischen Feedstocks wird Wärme über Wärmetauscher in das zu verarbeitende Material geleitet.

Anwendungsbeispiele sind Pyrolyse-, Vergasungs- und Reformingreaktoren zur Zersetzung und Konversion von Biomasse oder Kunststoffen. Technisch schwierig ist es in diesen Prozessen, zum Teil möglichst schnell und gleichzeitig effizient, eine große Wärmemenge in das zu verarbeitende Material zu führen. Aus ökologischen und ökonomischen Gründen ist es dabei vorteilhaft, Abwärme aus der Verbrennung einzelner Konversionsprodukte zu nutzen. Diese reicht potentiell oftmals aus, um die erforderliche Wärmemenge zur Verfügung zu stellen. Doch gerade bei zylindrischen Reaktoren kann aus Abgasen keine ausreichend große Wärmemenge von außen in das zu verarbeitende Material geleitet werden. Die Gründe hierfür liegen in der relativ geringen wärmetauschenden Fläche und der allgemein geringen Wärmekapazität von Gasen. Die wärmetauschende Fläche lässt sich zwar durch spezielle Bauformen der Wärmetauscher wie Rippenkörper erhöhen, jedoch sind diese Modifizierungen immer mit starken Druckverlusten verbunden. Aus diesem Grund ist eine kaskadenförmige Hintereinanderschaltung mehrerer Wärmetauscher oftmals nicht möglich.

Bezüglich des Heizmediums würde Wasser als Wärmeträger eine Alternative mit höherer Wärmekapazität darstellen, jedoch ist der Einsatz von Wasser bei Temperaturen von über 100 °C bei gleichem Volumen mit einer starken Druckerhöhung verbunden. Dies schränkt eine Anwendung als Wärmeträger stark ein oder erschwert diese zumindest und betrifft so auch Sicherheitsaspekte der gesamten Anlage. Flüssige Wärmeträger auf Salzbasis weisen demgegenüber zwar einen wesentlich höheren Siedepunkt auf, jedoch liegt auch der Schmelzpunkt oftmals deutlich über 0 °C, so dass diese bei Anlagenstillstand im Wärmetauscher erstarren könnten.

Nimmt man den zusätzlichen apparativen und sicherheitstechnischen Aufwand bei einem Einsatz unter Druck stehender Wärmeträger in Kauf, so eignen sich neben Wasserdampf auch unter Druck stehende Heißgase. Der Vorteil liegt hierbei in deutlich geringeren Druckverlusten im Vergleich zum Einsatz flüssiger und dampfförmiger Wärmeträger.

Um den Wärmeeintrag in den Pyrolyse- und Vergasungsreaktoren zu ermöglichen, wurden bislang verschiedene Wege oder Kombinationen dieser genutzt:
Indirekte Beheizung von außen, insbesondere elektrisch oder auf Basis von Brennern
Indirekte Beheizung von innen, insbesondere durch die Schneckenwelle oder hohle Schraubenflächen; z.B. Hohlschneckenwärmetauscher (u.a. DE4412536, US2335422, US3909958, US4930484, DE3503069)
Direkter Kontakt des Heizmediums mit dem Konversionsgut durch Einströmen eines aufgeheizten (inerten) Gases (z.B. DE60104724)
Direkter Kontakt des Heizmediums mit dem Konversionsgut durch aufgeheizte Wärmeaustauschpartikel wie Kugeln, welche dem zu verarbeitenden Material zugesetzt werden (u.a. DE2345800, DE376791, DE508566, DE60104724, DE102009007176, US2877106, US4110193)
Zur effizienten Wärmeübertragung mittels Wärmestrahlung werden diese und andere Konzepte teilweise modifiziert bzw. geringfügig angepasst. Beispiele sind u.a. schwarz eloxierte Rippenkörper oder Lackierungen mit Farbe, die im Infrarotbereich große Mengen an Strahlung emittiert.

In der Patentschrift GB19310012139 aus dem Jahr 1931 wird ein Wärmetauscher beschrieben, welcher eine netzartige Struktur nutzt. Bei dem in dieser Schrift genannten Gewebe handelt es sich um ein zweidimensionales Gewebe, welches durch Biegen sowie Falten in einen dreidimensionalen Körper umgewandelt wird. US 2009/229798 A1 beschreibt eine Reaktionsvorrichtung gemäß dem Oberbegriff des Anspruchs 1.

Ausgehend vom Stand der Technik liegt der Erfindung somit die Aufgabe zugrunde, eine Reaktionsvorrichtung mit Wärmetauscher mit verbesserten Eigenschaften bereitzustellen.

Erfindungsgemäß wird dies durch einen Wärmetauscher nach Anspruch 1 und dessen Verwendung gemäß dem Anspruch 15.

Erfindungsgemäß wird eine Reaktionsvorrichtung mit einer ersten Wand vorgeschlagen, die einen Innenraum definiert, in dem sich ein Rührwerk befindet, wobei ein Wärmetauscher an der dem Innenraum abgewandten Fläche der ersten Wand und/oder am Rührwerk zumindest teilweise vorgesehen ist, wobei der Wärmetauscher die Struktur eines Gitters aufweist und mindestens zwei die Struktur eines Gitters aufweisende Schichten vorliegen.

Als Reaktionsvorrichtung im Sinne der vorliegenden Erfindung wird jede Vorrichtung verstanden, in der eine Reaktion durchgeführt werden kann. Beispiele für solche Reaktionsvorrichtungen sind Reaktoren, insbesondere in Form eines Zylinders, beispielsweise Rohröfen. Der Ausdruck Reaktionsvorrichtung kann einen Reaktor, einen Abschnittdavon sowie mehrere, z.B. zwei bis vier, miteinander verbundene Reaktoren bezeichnen.

In der erfindungsgemäßen Reaktionsvorrichtung weist das Rührwerk zumindest teilweise den Wärmetauscher auf. Dazu kann das Rührwerk hohle Rührblätter haben, wobei in deren Hohlraume der Wärmetauscher vorgesehen ist.

In einer Ausführungsform weist die Reaktionsvorrichtung eine doppelte Wand aus der ersten Wand und einer zweiten Wand auf, so dass zwischen erster Wand und zweiter Wand ein Zwischenraum gebildet wird, in dem Wärmetauscher vorliegt. Auf diese Weise kann der Wärmetauscher in besonders günstiger Weise angebracht werden, um die verbesserten Eigenschaften zu erreichen.

In einer Ausführungsform ist die erfindungsgemäße Reaktionsvorrichtung ein Rohrofen. In einer weiteren Ausführungsform ist das Rührwerk eine Förderschnecke. Mit dieser Ausgestaltung können die erfindungsgemäß zu erreichenden verbesserten Eigenschaften in besonders günstiger Weise erreicht werden.

In einer Ausführungsform weist die Förderschnecke Abschnitte mit unterschiedlicher Steigung auf. Dadurch werden Abschnitte definiert, in denen die Komponenten unterschiedlich vermischt werden können, einzeln gezielt angesteuert werden können und die unterschiedliche Temperaturen aufweisen können.

In einer weiteren Ausführungsform weist die erfindungsgemäße Reaktionsvorrichtung mehrere Reaktionszonen mit unterschiedlicher Temperatur auf, dadurch kann erreicht werden, dass die Reaktionsprozesse abhängig von den Anforderungen gezielt gesteuert werden können.

In einer weiteren Ausführungsform liegen die mehreren Abschnitte entweder in einem Reaktor oder in miteinander verbundenen Reaktoren mit unterschiedlicher Temperatur vor. Dadurch können günstigerweise die Reaktionsprozesse vorteilhaft und gezielt gesteuert werden.

Insbesondere ist der Wärmetauscher für runde oder halbrunde Reaktoren, beispielsweise zur thermo-chemischen Umsetzung von Biomasse, Kohle, Kunststoffen, polymerhaltigen (Metall-) Gemischen oder Mischungen dieser günstig. Ferner ist eine Anwendung an Extrudern zur Verarbeitung von Polymeren, Kunststoffen u. ä. möglich.

Als anwendungsbezogene Ausführungen kann der Wärmetauscher in günstiger Weise dazu genutzt werden, um in Reaktionsvorrichtungen mit mehreren Reaktionszonen gezielt Wärmeenergie zu- oder abzuführen. Als Beispiel sei hier die Kaskadenführung bei der Biomassekonversion genannt, bei dem der mittlere Reaktorteil aus Gründen der Reaktionskinetik den höchsten Wärmebedarf hat. Diese Anforderung kann mit Hilfe der vorliegenden Erfindung durch die Installation verschiedener Temperaturzonen und gezielter Lenkung und Aufteilung des Heißgasstroms in dem Wärmetauscher realisiert werden.

Erfindungsgemäß ist ein Wärmetauscher zur Übertragung von thermischer Energie von einem Stoffstrom auf einen anderen Stoffstrom in der Reaktionsvorrichtung vorgesehen, wobei der Wärmetauscher die Struktur eines Gitters (nachfolgend auch als Gitterstruktur bezeichnet) aufweist und wobei der Wärmetauscher mindestens zwei die Struktur eines Gitters aufweisende Schichten oder Lagen umfasst oder daraus besteht.

Unter einer Gitterstruktur im Sinne der vorliegenden Erfindung wird jede Struktur eines Gitter verstanden, wobei ein Gitter eine Anordnung länglicher Teile in insbesondere gleichmäßigen Abständen ist. Die länglichen Teile können dabei von anderen länglichen Teilen gekreuzt sein, wobei ein Gebilde entsteht, das insbesondere regelmäßige Maschen oder Öffnungen aufweist. Die Maschen/Öffnungen können beliebige geometrische Formen aufweisen, beispielsweise können sie rhombisch, quadratisch oder sechseckig ausgebildet sein. Ferner kann das Gitter eine umlaufende Einfassung aufweisen. Die Gitterstruktur kann starr oder flexibel sein.

Diese Gitterstruktur wird als Wärmetauscher eingesetzt. Dies bedeutet insbesondere, dass die Gitterstruktur so angepasst ist, dass sie die Voraussetzungen erfüllt, um als Wärmetauscher eingesetzt werden zu können. Der erfindungsgemäße Wärmetauscher ist insbesondere so angepasst, dass alle Schichten durchströmt werden.

Im Wärmetauscher liegen mindestens zwei Schichten mit Gitterstrukturen vor, beispielsweise zwischen etwa 3 und etwa 50 oder zwischen etwa 5 und etwa 30. Dieser mehrschichtige Aufbau kann beispielsweise dadurch hergestellt werden, dass die Schichten mit Gitterstruktur aufeinander gestapelt werden.

Der aus der vorstehenden GB 19310012139 bekannte Wärmetauscher unterscheidet sich vom erfindungsgemäß eingesetzten Wärmetauscher durch folgende Punkte: Das in GB19310012139 beschriebene Netz besteht trotz Biegung und Faltung zum einen nur aus einer durchströmten Schicht und zum anderen wird diese nur in radialer Richtung durchströmt ähnlich dem Durchgang eines Siebes. Um eine möglichst große, wärmeübertragende Fläche aufzuweisen, müsste das Netz eine sehr feine Netzstruktur aufweisen, die jedoch zu hohen Druckverlusten führen würde. Ähnliches tritt bei einer Schichtung mehrerer Lagen des Netzes aus der GB19310012139 auf. Der erfindungsgemäß eingesetzte Wärmetauscher weist im Gegensatz dazu mehrere Schichten auf, von denen jede Schicht eine Gitterstruktur aufweist, und der ferner so angepasst ist, dass alle Schichten durchströmt werden.

Mit dem Wärmetauscher ist es möglich, zielgenau und effizient Wärme, v.a. mittels Wärmestrahlung in endotherme Prozesse unterschiedlicher Temperaturniveaus, insbesondere Pyrolyse, Vergasung und Reforming, zu bringen und dabei Abwärme anderer Prozesse zu nutzen. Die Ausnutzung der sehr effizienten Energieübertragung mittels Wärmestrahlung kann durch den Wärmetauscher sogar bei vergleichsweise geringen Temperaturen von 500 °C erzielt werden. Als Wärmequelle dient insbesondere Heißgas, welches aus der Verbrennung von Konversionsprodukten z. B. einer Pyrolyse oder Vergasung stammt. Der bei vielen Prozessen notwendige, schnelle Eintrag von Wärme wird maßgeblich von der zur Verfügung stehenden wärmetauschenden Fläche bestimmt, welche durch die spezielle Gitterstruktur gegenüber der Fläche der Wandung der Reaktorvorrichtung signifikant vergrößert wird. Die bei vergleichbaren Systemen wie Rippenkörpern auftretenden Druckverluste werden auf ein Minimum verringert.

Grund für die sehr niedrigen Druckverluste ist, dass eine laminare Strömung mit einhergehendem geringen Volumenstrom bzw. geringen Strömungsgeschwindigkeiten ausreichend ist, um den Wärmetauscher effizient betreiben zu können. Daher kann auf die Erzeugung turbulenter Strömungen verzichtet werden, für die wiederum deutlich größere Aggregate notwendig wären. Dies spart nicht nur Investitions- sondern auch Energiekosten ein.

In einer Ausführungsform sind die Schichten des Wärmetauschers an deren Berührungspunkten oder -flächen miteinander verbunden, wobei der Ausdruck "verbunden" darauf hinweist, dass eine dauerhafte Bindung vorliegen kann, wie sie beispielsweise durch Schweißen, Löten oder Kleben erreicht werden kann. Dies ist hinsichtlich des Wärmeüberganges im niedrigeren Temperaturbereich vorteilhaft.

In einer Ausführungsform umfasst oder besteht die Struktur eines Gitters aus einem Maschengitter, d.h. einem Gitter mit Maschen, das je nach Anwendungsfall individuell gestaltet werden kann. Im Wärmetauscher kann jede Schicht davon ein solches Maschengitter aufweisen oder daraus bestehen. Damit werden die erfindungsgemäßen Vorteile in besonders günstiger Weise erreicht. Mit Bezug auf die Gitterstruktur kann es sich insbesondere um gestapelte, gezogene Gitterflächen mit Drähten handeln. Generell ist eine Ausführung der Gitterstruktur in beliebigen dreidimensionalen Strukturen möglich. Als Beispiel einer geordneten bzw. symmetrischen Struktur kann eine Wabenstruktur genannt werden. Das Gitter kann jedoch auch als nicht geordnete, unsymmetrische Struktur Anwendung finden. Zur Anwendung als Wärmetauscher für Heißgase sind sehr niedrige Druckverluste sowie hohe Anteile von Wärmestrahlung gegenüber anderen Arten der Wärmeübertragung günstig. In Abhängigkeit von der Werkstoffauswahl kommen die Effekte der Wärmestrahlung bereits bei vergleichsweise niedrigen Temperaturen (400 bis 500 °C) zum Tragen.

In einer Ausführungsform kann das Maschengitter mindestens einen der folgenden Parameter, in einigen Ausführungsformen auch alle dieser Parameter, aufweisen: eine Maschenweite von etwa 3 mm bis etwa 30 mm oder von etwa 8 mm bis etwa 25 mm; einen Lückenvolumenanteil von etwa 80% bis etwa 97% oder von etwa 90% bis etwa 95%, oder eine Flächendichte zum konvektiven Wärmetransfer vom Gas auf das Gitter von etwa 500 m²/m³ oder weniger. Durch eine hohe Kanalweite von etwa 30 mm bis etwa 150 mm oder von etwa 50 mm bis etwa 100 mm, dem Lückenvolumenanteil und der Oberflächendichte reicht eine außerordentlich niedrige Heißgasflussgeschwindigkeit von maximal etwa 1,5 m/s zur effizienten Wärmeübertragung aus. Die Erzeugung einer turbulenten Gasströmung mit einhergehendem Druckverlust ist nicht erforderlich.

Für die geometrische Ausführung der Gitterstruktur gibt es verschiedene Möglichkeiten. Die Ausführung kann beispielsweise in Form mehrerer Schichten einer relativ flachen, näherungsweise zweidimensionalen Gitterstruktur erfolgen, die durch Drähte miteinander verbunden sind. Ebenso kann die Gitterstruktur aus wellenförmig gebogenen Drähten bestehen, die über mehrere Ebenen an geeigneten Punkten miteinander verbunden sind. Die Gitterstruktur kann zusätzlich mit Längsrippen versehen werden, wodurch die Wärmeübertragungsfläche erhöht wird sowie die Wärmeleitung entlang der Reaktorwandung verbessert werden kann. Zusätzlich können Rippen oder Bleche zur gezielten Gasstromführung innerhalb des Wärmeübertragungssystems dienen. Als weitere Möglichkeit kann die Gitterstruktur miteinander verknüpften Drahtkörpern aufweisen, die eine mehr oder weniger komplexe Geometrie aufweisen können. Diese Drahtkörper können in ihrer Ausführung beispielsweise Ähnlichkeiten mit der Geometrie von Raschigringen und deren Abwandlungen aufweisen. Ebenso kann das Gitter ähnlich einer Wabenstruktur aufgebaut sein. Auch eine Ausführung als ungeordnete Gitterstruktur, ähnlich wie Stahlwolle, ist möglich. Die Drahtstärke kann dabei in Abhängig von den Prozessparametern (vor allem Temperatur und Sauerstoffgehalt) gewählt werden, um die Beständigkeit der Gitterstruktur zu gewährleisten.

In einer Ausführungsform kann der Wärmetauscher, d.h. die Gitterstruktur, ein Metall, eine Metalllegierung, eine gesinterte Metallverbindung oder einen keramischen Werkstoff umfassen oder daraus bestehen. Für die Wärmeübertragung im Niedertemperaturbereich eignen sich beispielsweise Metalle wie Kupfer, Eisen, Aluminium sowie verschiedene Metalllegierungen (z.B. VA-Stahl). Eine weitere Möglichkeit besteht in der Anwendung von gesinterten Metallverbindungen (z.B. gesinterte Kupferschicht auf einem Stahlgrundkörper) oder auf andere Weise beschichtete Werkstoffe und Metalle. Die Kombination verschiedener Werkstoffe kann aus Gründen des Korrosionsschutzes und/oder zur Verbesserung der Eigenschaften der Wärmeleitung und/oder Wärmestrahlung erfolgen. Für den Hochtemperaturbereich können unter anderem keramische Werkstoffe (zum Beispiel Aluminiumoxid oder Siliziumcarbid) zur Anwendung kommen.

In einer Ausführungsform kann der Wärmetauscher einen Katalysator aufweisen. Durch spezielle Beschichtungen der Gitterstruktur, z.B. metallische oder keramische Beschichtung, kann neben der Funktion als Wärmetauscher außerdem eine katalytische Wirkung erreicht werden, die gewünschte Reaktionen im genutzten Wärmetauschermedium begünstigt. Ein Beispiel ist bei der Abwärmenutzung von Rauchgasen die Reduktion von schädlichen Rauchgaskomponenten (z.B. NOx, Dioxine/Furane, etc.).

In einer Ausführungsform kann der Wärmetauscher als Reflektor (z.B. polierter Draht) ausgebildet sein, insbesondere ist dann die Wand der Reaktionsvorrichtung als Schwarzstrahler (z.B. calorisierter Stahl) ausgebildet. Damit kann eine gleichmäßige Verteilung der Strahlungswärme erreicht werden.

In einer Ausführungsform kann der Wärmetauscher Rippen, insbesondere Längsrippen, aufweisen. Insbesondere bei relativ geringen Rauchgastemperaturen ist der Einbau von Rippen/Längsrippen in die Gitterstruktur günstig, die fest mit der Reaktorwandung verbunden sein können. Hierdurch wird die Wärmeübertragungsfläche zusätzlich erhöht. Außerdem findet eine verbesserte Wärmeleitung in die Reaktorwand statt. Der erfindungsgemäße Wärmetauscher kann für die Beheizung von Festbettreaktoren vorgesehen sein. Zur weiteren Erhöhung der Wärmeübertragungsfläche können in diesem Fall Rippen im Reaktorinneren eingebaut werden, die ins Schüttbett reichen. Dadurch kann die erhöhte Wärmemenge, die von außen durch das Gitter zur Verfügung gestellt wird, effizient in das Reaktionsbett eingebracht werden.

In einer Ausführungsform kann der Wärmetauscher zusammen mit einem Isoliermaterial vorliegen. Dies kann zum Beispiel sinnvoll sein, um eine Überhitzung der Reaktionsvorrichtung am Ort der Heißgaseinführung zu vermeiden oder um Lager und Dichtungen an Anfangs- bzw. Endstücken der Reaktionsvorrichtung vor Überhitzung zu schützen. Als Isolierung bzw. Puffer sowie zur Homogenisierung der Temperaturverteilung kann auch eine Veränderung der Materialstärke der isolierenden Schicht genutzt werden. Auf diese Weise kann eine tendenziell zu heiße Temperatur im Außenbereich (d. h. in diesem Fall im Wärmetauscher) gleichmäßig und auf einem für die Reaktion passendem Niveau in den spezifischen Reaktionsbereich eingebracht werden. Die Kombination von Wärmetauscher mit Isoliermaterial kann in Sandwichbauweise erfolgen, die auch in Keilform ausgeführt werden kann. Dies ist vor allem bei longitudinal durchströmten Wärmetauschern sowie Kreuzstrom-Wärmetauschern günstig.

In einer Ausführungsform kann die erfindungsgemäße Reaktionsvorrichtung zum Karbonisieren, Cracken und/oder Reformieren von Biomasse und/oder Bioreststoffen verwendet werden. Dazu können mindestens zwei Reaktionsvorrichtungen verwendet werden, die bei unterschiedlichen Temperaturen betrieben werden können, wobei die mindestens zwei Reaktionsvorrichtungen kaskadenartig angeordnet sein können. Es können insbesondere Biomasse bzw. Bioreststoffe unter Ausschluss von Sauerstoff in zwei Reaktorstufen karbonisiert, gecrackt und reformiert werden. Die bei diesen Prozessen entstehenden festen Konversionsprodukte können vergast und anschließend in einem Gasbrenner verbrannt werden, wobei Heißgas erzeugt wird.

Zur effizienten, prozessinternen Nutzung des Heißgases wird der Wärmetauscher eingesetzt, um an die Reaktionsvorrichtung basierend auf der speziellen, gestapelten/geschichtet und damit dreidimensionalen Gitterstruktur des Wärmetauschers, welche mit dem Heißgas durchströmt wird, Energie zu übertragen. Durch die spezielle Struktur dieses Gitters kann die im Heißgas vorhandene thermische Energiemenge durch Vergrößerung der wärmeübertragenden Fläche effizient in die Reaktionsvorrichtung eingebracht werden, ohne hohe Druckverluste im System aufzuweisen. Die kaskadenförmige Hintereinanderschaltung der Reaktionsvorrichtungen unterschiedlicher Temperaturen erlaubt es, die nach jedem Schritt vorhandene Restenergiemenge zu nutzen. Auf diese Weise sinkt der Anteil sekundärer Energiequellen an der gesamten Energie- bzw. Wärmebereitstellung deutlich und das Gesamtsystem kann hinsichtlich der thermischen Energiebilanz nach Erreichen der Betriebstemperaturen autark betrieben werden.

In einer Ausführungsform kann die erfindungsgemäße Reaktionsvorrichtung zur Abführung von Wärme aus exothermen Prozessen sowie zur Wärmerückgewinnung verwendet werden. So können mit dem Wärmetauscher beispielsweise Reaktionsvorrichtungen indirekt von außen gekühlt werden. Auch ist es aufgrund der sehr geringen Druckverluste möglich, Heißgasströme effektiv zu kühlen und eine Wärmerückgewinnung zu ermöglichen, indem der Wärmetauscher direkt in den Abgasstrom eingebracht werden kann.

Eine deutliche Verbesserung ergibt sich gegenüber der Beheizung mittels elektrischen oder Brenner-basierten Systemen hinsichtlich der hocheffizienten Wärmeübertragung in das Konversionsgut, welche sich durch einen hohen Anteil an Wärmestrahlung auszeichnet. Gerade die Nutzung von Heißgasen aus der Verbrennung von Konversionsprodukten ist bei konventionellen Wärmeübertragern aufgrund der begrenzten Wärmeübertragungsfläche(n) limitiert und unter anderem in Folge hoher Druckverluste ineffizient.

In einer Ausführungsform kann die erfindungsgemäße Vorrichtung zur dynamischen Regelung temperaturgesteuerter (Batch-)Reaktorsysteme verwendet werden, in denen es die Reaktionskinetik erforderlich macht, dem in der Reaktionsvorrichtung stattfindenden Prozess erst Wärme zuzuführen und nach Überschreiten einer vorher festgelegten Schwelle Wärme wieder abzuführen. Beispiele für solche Prozesse können sowohl chemische als auch enzymatische Reaktionen darstellen. Aufgrund der dynamischen An-, Abfahrund Wechselmöglichkeiten sind auch Anwendungen in Notabschaltverfahren möglich.

Der Wärmetauscher eignet sich neben der effizienten Beheizung auch zur Kühlung von Reaktoren. Beispielhaft seien exotherme Konversionsprozesse (z.B. Vergasung und Verbrennung) genannt, bei denen die Gefahr einer Überhitzung besteht. Der Wärmetauscher ermöglicht eine gezielte Abfuhr von Überschusswärme, vor allem auch dann, wenn diese lokal in bestimmten Reaktionszonen auftritt. Dies kann durch die gezielte Steuerung des Kühlmediums über Umlenkbleche oder voneinander getrennte Wärmetauscher-Kaskaden erfolgen.

Des Weiteren ist die Kombination des Wärmetauschers mit verschiedenen Heizsystemen wie zum Beispiel Widerstandsbeheizung oder Erwärmung durch Induktion möglich. In Bezug auf die genannten Beispiele kann das Gitter bei geeigneter Werkstoffwahl auch als elektrischer Leiter genutzt werden, um nicht nur als Wärmetauscher, sondern auch als aktives Heizelement zu fungieren. Als Wärmeübertragungsmedien eignen sich neben den bereits genannten grundsätzlich alle Fluide, darunter Luft oder Reingase wie Stickstoff oder Argon. Auch bei höheren Temperaturen noch flüssige Medien wie zum Beispiel Thermoöle sind denkbar.

Mit dem Wärmetauscher werden mehrere Vorteile gegenüber anderen Wärmetauscher-Systemen erreicht. Ein Vorteil entsteht durch die Erhöhung der Wärmeübertragungsfläche, wodurch wesentlich geringere Strömungsgeschwindigkeiten bzw. Volumenströme benötigt werden. In Folge sind die Druckverluste geringer als in Wärmetauschern, die eine ausreichende Wärmeübertragungsleistung erst bei turbulenten Strömungsverhältnissen erreichen (zum Beispiel Platten- oder Rohrbündelwärmetauscher). Die Verwendung der Gitterstruktur hebt sich deshalb auch von anderen Lösungen ab, die einer Erhöhung der Wärmeübertragungsfläche dienen, beispielsweise die Nutzung einer Kugelschüttung oder von Stahlwolle. Beide Lösungen führen im Gegensatz zu dem Wärmetauscher mit Gitterstruktur zu hohen Druckverlusten. Ein weiterer Vorteil entsteht dadurch, dass der erfindungsgemäße Wärmetauscher aufgrund des geringen Druckverlusts weitestgehend tolerant gegen Inkrustation ist, wodurch das Ausfallrisiko und die Wartungskosten geringer als bei Wärmetauschern nach dem Stand der Technik sind. Dadurch eignet sich der Wärmetauscher unter anderem besonders für staub- und/oder salzhaltige Rauchgase.

Durch die geringen Druckverluste des Wärmetauschers mit Gitterstruktur ergibt sich die Möglichkeit mehrere Reaktoren kaskadenförmig anzuordnen, sofern diese Wärme auf unterschiedlichen Temperaturniveaus benötigen. Die im Heißgas vorhandene Wärmeenergie wird stufenweise in die Konversionsprozesse eingetragen. Die nach der letzten Stufe verbliebene Restwärme kann zum Aufheizen der Verbrennungsluft für den Gasbrenner und/oder zum Trocknen möglicher, feuchter Feedstocks des Gesamtprozesses genutzt werden.

Zu einer sehr produktspezifischen Ausgestaltung der Wärmeeinbringung können verschiedene Typen von Wärmetauschern kombiniert werden. So könnte beispielsweise der erste Reaktor im Gegen-, der zweite im Kreuz- und die Reaktoren drei und vier im Gleichstrom gefahren werden. Dies ist besonders dann günstig, wenn das Inputmaterial langsam erhitzt, dann bei einer konstanten Temperatur gleichmäßig Wärme zugeführt und später schnell auf höhere Temperaturen gebracht werden soll.

Nachfolgend soll die Erfindung anhand von Figuren und Ausführungsbeispielen ohne Beschränkung des allgemeinen Erfindungsgedanken näher erläutert werden. Dabei zeigt:
Figur 1 eine erfindungsgemäße Reaktionsvorrichtung.
Figur 2 einen Wärmetauscher.
Figur 3 eine Reaktoranordnung, in der der Wärmetauscher eingesetzt wird.
Figur 4 die Kombination von Wärmetauscher mit Isoliermaterial in einem Rohrofen mit Förderschnecke als erfindungsgemäße Reaktionsvorrichtung in einer ersten Ausführungsform.
Figur 5 die Kombination von Wärmetauscher mit Isoliermaterial in einem Rohrofen mit Förderschnecke als erfindungsgemäße Reaktionsvorrichtung in einer zweiten Ausführungsform.
Fig. 6 zeigt eine dreidimensionale Ansicht eines mit dem Wärmetauscher gefüllten Schneckenflügels eines Rohrofens mit Förderschnecke sowie der Rohrleitungen für die Beheizung der einzelnen Schneckenabschnitte.
Fig. 7 zeigt eine Seitenansicht des Rohrofens von Fig. 6mit drei einzeln thermisch sowie mechanisch ansteuerbaren Schneckenabschnitten.
Fig. 8a und 8b zeigen dreidimensionale Ansichten des Übergangs zur Beheizung der einzelnen Schneckenabschnitte des Rohrofens von Fig. 6.

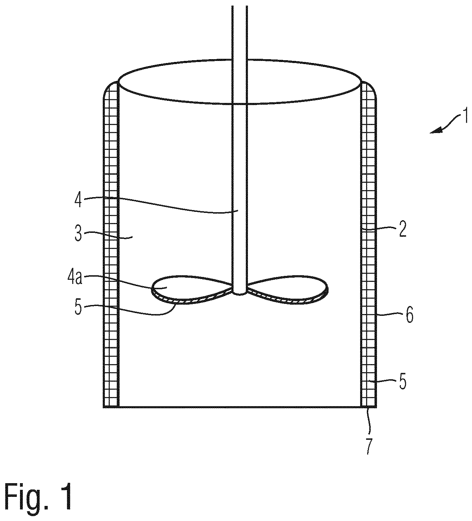

Fig. 1 zeigt eine erfindungsgemäße Reaktionsvorrichtung 1. Sie weist eine erste Wand 2 auf, die einen Innenraum 3 definiert, in dem sich ein Rührwerk 4 befindet. Ferner weist die erfindungsgemäße Reaktionsvorrichtung eine zweite Wand 6 auf, die einen sich zwischen der ersten Wand 2 und der zweiten Wand 6 befindlichen Zwischenraum 7 definiert. In diesem Zwischenraum 7 befindet sich der Wärmetauscher 5. Das Rührwerk 4 weist hohle Schraubenflügel 4a auf, in denen sich der Wärmetauscher 5 in analoger Weise wie im Zwischenraum 7 zwischen erster Wand 2 und zweiter Wand 6 befindet.

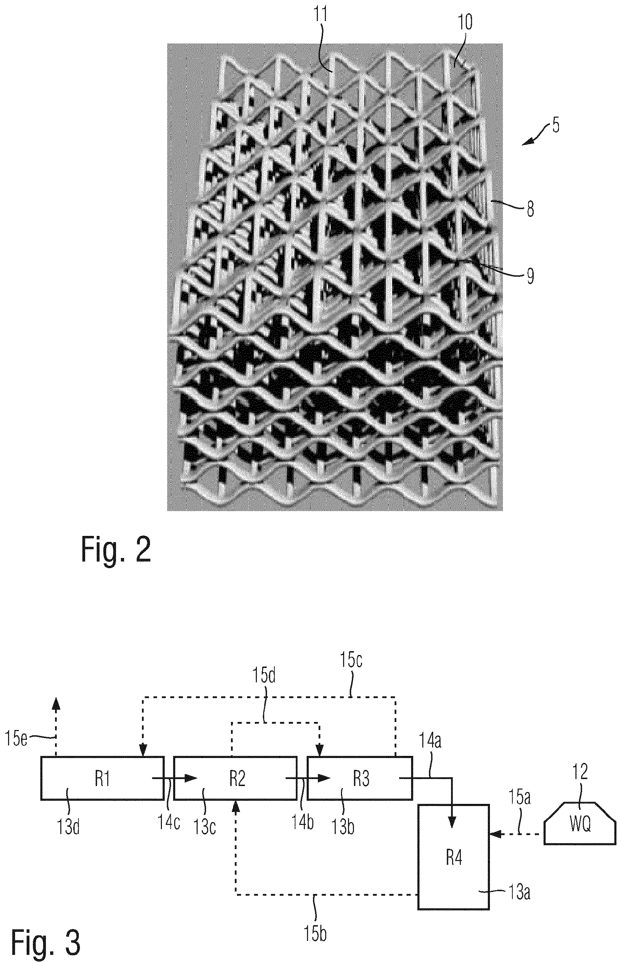

Fig. 2 zeigt einen Wärmetauscher 5. Mit Bezug auf die Gitterstruktur handelt es sich um gestapelte, gezogene Gitter mit Drähten 8, welche an den Berührungspunkten 9 jeweils die Drähte 8 des nächsten Gitters berühren und direkt mit ihnen verschweißt sind, was insbesondere hinsichtlich des Wärmeüberganges im niedrigeren Temperaturbereich sinnvoll ist. Die Gitterstruktur weist Maschen 10 auf, so dass es sich um ein Maschengitter handelt. Ferner weist die Gitterstruktur Rippen 11 auf.

Das Maschengitter weist die folgenden Parameter auf: eine Maschenweite von ca. 8 mm, einen Lückenvolumenanteil von ca. 90%, oder eine Flächendichte zum konvektiven Wärmetransfer von Gas auf Gitter von bis zu ca. 500 m²/m³. Durch eine hohe Kanalweite (ca. 100 mm), Lückenvolumenanteil und Oberflächendichte reicht eine außerordentlich niedrige Heißgasflussgeschwindigkeit von maximal 1,5 m/s zur effizienten Wärmeübertragung aus. Die Erzeugung einer turbulenten Gasströmung mit einhergehendem Druckverlust ist nicht erforderlich.

Folgendes Anwendungs- und Rechenbeispiel zeigt die Vorteilhaftigkeit des Wärmetauschers 5 der Figur 2 beim Einsatz in einer Reaktionsvorrichtung 1. In einem thermischen Verfahren wird Biomasse wie Klärschlamm, Substrat aus Biogasanlagen oder Pferdedung unter Ausschluss von Sauerstoff in zwei Reaktorstufen karbonisiert, gecrackt und reformiert. Dabei entstehen im Allgemeinen drei Fraktionen, die nach ihrem Aggregatzustand in feste (Kohle), flüssige (Öl) und gasförmige Produkte unterschieden werden. Für die flüssigen sowie gasförmigen Produkte gibt es beispielsweise die wirtschaftlich und ökologisch sehr interessante Option, diese in einem Dual-Fuel Blockheizkraftwerk (BHKW) einzusetzen, um zum Beispiel nachfragespezifisch elektrischen Strom und Wärme zu produzieren. Die entstandene kohlenstoffreiche Kohle wird hingegen vergast und anschließend in einem Gasbrenner verbrannt, um die für den Prozess notwendige Wärme bereitzustellen. Die Verbrennungsgase mit einer Ausgangstemperatur von ca. 1200 °C werden zur Beheizung des Reaktors über insgesamt 4 Zonen mit unterschiedlichen Temperaturniveaus eingesetzt, so dass die Verbrennungsgase sequentiell durch vier Reaktionszonen geleitet werden (vgl. Fig. 3).

Fig. 3 zeigt eine Reaktoranordnung, in der der Wärmetauscher eingesetzt wird. Die Anordnung weist vier Reaktionszone 13a, 13b, 13c und 13d auf, wobei es sich dabei um einzelne, separate, voneinander getrennte Reaktoren oder auch um verschiedene Abschnitte eines Reaktors handeln kann. Der Einfachheit halber wird nachfolgend für diese beiden Fälle der Begriff Reaktionszone verwendet. Die Reaktionszone 13a ist mit einer Wärmequelle 12 verbunden, so dass Heißgas über die Leitung 15a in die Reaktionszone 13a geleitet wird. Von der Reaktionszone 13a wird über die Leitung 15b Heißgas in die Reaktionszone 13c, und von der Reaktionszone 13c über die Leitung 15b in die Reaktionszone 13b geführt. Von der Reaktionszone 13b folgt der Weg des Heißgases über Leitung 15c in die Reaktionszone 13d, von wo das Heißgas über die Leitung 15e ausgeleitet wird. Das Konversionsgut wird über die Leitungen 14c, 14b und 14a in die Reaktionszone 13a ausgehend von der Reaktionszone 13d über die Reaktionszone 13c und 13b geleitet. Dabei hat die Reaktionszone 13a die höchste Temperatur. Die Leitungen des Heißgases 15a, 15b, 15c und 15d sind mit dem vorstehend beschriebenen Wärmetauscher 5 mit Gitterstruktur versehen.

Das diesem Beispiel zugrundeliegende Reaktorensystem ist kommerziellen Maßstabs und hat eine Kapazität von 300 kg/h. Das System weist die in Tabelle 1 angegebenen Eckdaten auf:

**Tab. 1: Geometrische Daten des Reaktorensystems**

| | Reaktionszone 13d | Reaktionszone 13c | Reaktionszone 13b | Reaktionszone 13a |
|---|---|---|---|---|
| Innendurchmesser [mm] | 800 | 800 | 800 | 1400 |
| Länge [mm] | 2400 | 2400 | 2100 | 800 |
| Wandstärke [mm] | 12 | 12 | 12% | |
| Weite der Gaskanäle [mm] | 100 | 100 | 100 | 100 |

Bzgl. der in Tab. 1 aufgeführten Geometrien ist anzumerken, dass Weiten von 10 bis 200 mm als typisch angesehen werden. Kleine Reaktoren im Technikums- oder gar Labormaßstab können hingegen auch mit Weiten unter 10 mm betrieben werden.

Über ein solches, wie in Tab. 1 beschriebenes, System lassen sich abhängig vom Wärmefluss im Reaktorinnenraum, den Heißgastemperaturen und Wandtemperaturen Wärmeflüsse von über 20 kW/m² bei geringen Druckverlusten realisieren.

Im konkreten Beispiel werden über 4 Reaktionszonen 13a, 13b, 13c und 13d insgesamt 156,9 kW Wärmefluss über eine Gesamtwandfläche von 15,6 m² bei Heißgastemperaturen von 1200 °C (Eintritt) bis 523 °C (Austritt) realisieren. Gleichzeitig wird ein rechnerischer Druckverlust von nur 129,2 hPa erzeugt.

Bei optimaler Vorwärmung der Verbrennungsluft unter Nutzung der Abwärme kann hierbei ein thermischer Wirkungsgrad des Wärmeübertragungsmechanismus von bis zu 86,9% unter Vernachlässigung von Wärmeverlusten in den Leitungen (14a-e) und durch Abstrahlung der Reaktoroberflächen erreicht werden.

Tabelle 2 zeigt die Ergebnisse des Ausführungsbeispiels hinsichtlich wärmeenergetischer Daten.

**Tabelle 2**

| | Reaktionszone 13d | Reaktionszone 13c | Reaktionszone 13b | Reaktionszone 13a |
|---|---|---|---|---|
| Wärmefluss [kW/m2] | 13,8 | 16,3 | 11,1 | 5,3 |
| Temperatur IN [°C] | 710 | 1049 | 838 | 1200 |
| Temperatur OUT [°C] | 523 | 838 | 710 | 1049 |

Für die Bereitstellung der dem Beispiel zugrundeliegenden Menge thermischer Energie in 690 kg/h Heißgas bei 1200°C werden pro Stunde 48,3 kg der erzeugten (Bio-)Kohle benötigt, welche einen Heizwert von 16,6 MJ/kg und einen Aschegehalt von 38 Ma.-% aufweist. In diversen Versuchen mit unterschiedlichsten Einsatzmaterialien konnte gezeigt werden, dass diese Menge prozessintern bereitgestellt werden kann (durchschnittlich werden aus 400 kg/h Input 120 kg/h Biokohle erzeugt)

Zur Erzeugung des Heißgases wird die Kohle zunächst in einem Gegenstromvergaser vergast und anschließend in einer Druckkammer unter leichtem Überdruck verbrannt. Hierbei kann ein Kaltgaswirkungsgrad im Bereich von 80-90 % erreicht werden, sodass der thermische Gesamtwirkungsgrad eines solchen Beheizungssystems bei ca. 70-80 % liegt.

Zur pneumatisch effizienten Überwindung des Druckverlustes des Beheizungssystems kann eine Kombination von Druck- und Sauggebläse eingesetzt werden, was aus Gründen der Materialauswahl einen Abgaswärmetauscher günstig macht.

Grundsätzlich gilt weiter, dass der Gesamtwirkungsgrad eines solchen Beheizungssystems mit der Eintrittstemperatur des Verbrennungsgases ansteigt.

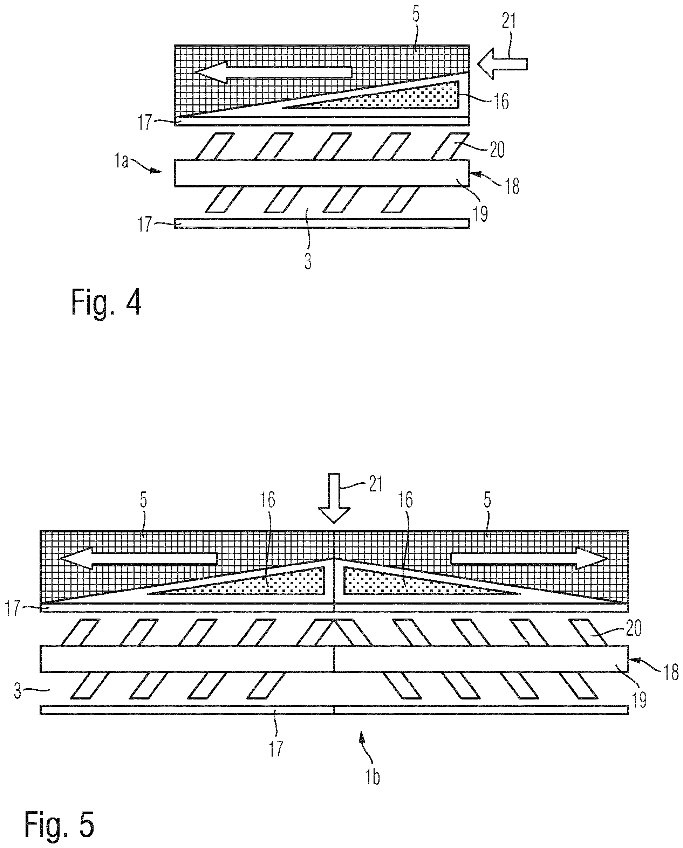

Die Figuren 4 und 5 zeigen wie der Wärmetauscher 5 mit Isoliermaterial 16 kombiniert wird. Dies kann zum Beispiel günstig sein, um eine Überhitzung des Reaktors am Ort der Heißgaseinführung zu vermeiden oder um Lager und Dichtungen an Anfangs- bzw. Endstücken des Reaktors vor Überhitzung zu schützen. Die Kombination von Wärmetauscher 5 und Isoliermaterial 16 ist in Sandwichbauweise in Keilform ausgeführt. Dies ist vor allem bei longitudinal durchströmten Wärmetauschern sowie Kreuzstrom-Wärmetauschern sinnvoll, wie sie in den folgenden Figuren 4 und 5 dargestellt sind.

Fig. 4 zeigt eine der möglichen Reaktionszonen 13a, 13b, 13c und 13d aus Fig. 3. Die dort beschriebene Reaktionsvorrichtung 1 ist als Rohrofen 1a beispielhaft dargestellt, wobei die Rohrwandung 17 den Innenraum 3 definiert, in dem sich eine Förderschnecke 18 befindet, die eine Schneckenwelle 19 und Schneckenflügel 20 aufweist. Auf der dem Innenraum abgewandten Fläche ist der Wärmetauscher 5 und das Isoliermaterial 16 vorgesehen. Beide sind in etwa keilförmig ausgebildet und aufeinander gestapelt. Der Heißgasstrom 21 läuft longitudinal entlang der Rohrwandung 17 und durchströmt dabei den keilförmig ausgestalteten Wärmetauscher 5 sowie das ebenfalls keilförmig ausgestaltete Isoliermaterial 16.

Fig. 5 zeigt die Kombination von Wärmetauscher 5 und Isoliermaterial 16 in einem Kreuzwärmetauscher 1b. Der Kreuzwärmetauscher 1b umfasst eine Rohrwandung 17, die den Innenraum 3 definiert, in dem sich die Förderschnecke 18 befindet, die eine Schneckenwelle 19 und Schneckenflügel 20 aufweist. Dabei weist der Kreuzstromwärmetauscher 1b zwei Abschnitte auf, die sich durch die in Fig. 5 dargestellten entgegenlaufenden Steigungen der Schneckenflügel auszeichnet. In beiden Abschnitten befindet sich auf der dem Innenraum 3 gegenüberliegenden Fläche der Rohrwandung 17 der Wärmetauscher 5 und das Isoliermaterial 16, die beide aufeinander gestapelt sind und keilförmig ausgestaltet sind. Der Heißgasstrom 21 ist in Fig. 5 mit Pfeilen gekennzeichnet. Der Heißgasstrom 21 teilt sich dabei und fließt in beide Abschnitte.

Bei Reaktoren mit innenliegenden Rühraggregaten wie Schnecken 18 und großen Reaktordurchmessern ist über die Beheizung von außen, zusätzlich auch eine Beheizung durch die Schneckenwelle 19 (Variante 1) und/oder durch die Schneckenflügeln 20 (Variante 2) möglich. Im Fall der Variante 2 gibt es abermals zwei Varianten (2a und 2b):
Variante 1): Die Schneckenwelle 19 wird (zusätzlich) zu Heizzwecken genutzt: Die Schneckenwelle 19 ist hohl und mit dem Wärmetauscher 5 mit Gitterstruktur befüllt. Diese wird dann vom Heißgas bei entsprechender Temperatur durchströmt und leitet thermische Energie vom Reaktorinneren in das Konversionsgut.
Variante 2): Die Schneckenflügel 20 sind ebenfalls mit dem Wärmetauscher 5 mit Gitterstruktur gefüllt und werden alternativ zur Schneckenwelle 19 oder zusätzlich zu dieser von Heißgas durchströmt:
   2a): Die mit dem Wärmetauscher 5 mit Gitterstruktur gefüllten Schneckenflügel 20 werden von Anfang bis Ende mit Heißgas durchströmt. Diese Ausführung ist insbesondere dann interessant, wenn ein innerer Temperaturgradient genutzt werden kann, beispielsweise Gleichstromwärmetauscher, um das zu konvertierende Medium auf die gleiche Temperatur wie das Heißgas zu bringen.
   2b): Durch die Schneckenwelle 19 werden Heißgase unterschiedlicher oder gleicher Temperaturen in einzelnen Rohren 22 zu unterschiedlichen Abschnitten 25A, 25B, 25C der Schnecke geführt. Die Rohrenden leiten die Heißgase dann in Segmente der Schneckenflügel 20, welche die Wärmeenergie zielgenau in das Konversionsgut einbringen können. Diese Variante kann genutzt werden um Material schrittweise zu temperieren oder aber entlang einer kaskadenförmigen Anordnung von Reaktoren. In diesem zuletzt genannten Fall können die einzelnen Reaktoren in einem System, baulich nicht getrennt voneinander installiert werden. Dies spart Raum ein und kann Wärmeverluste reduzieren.

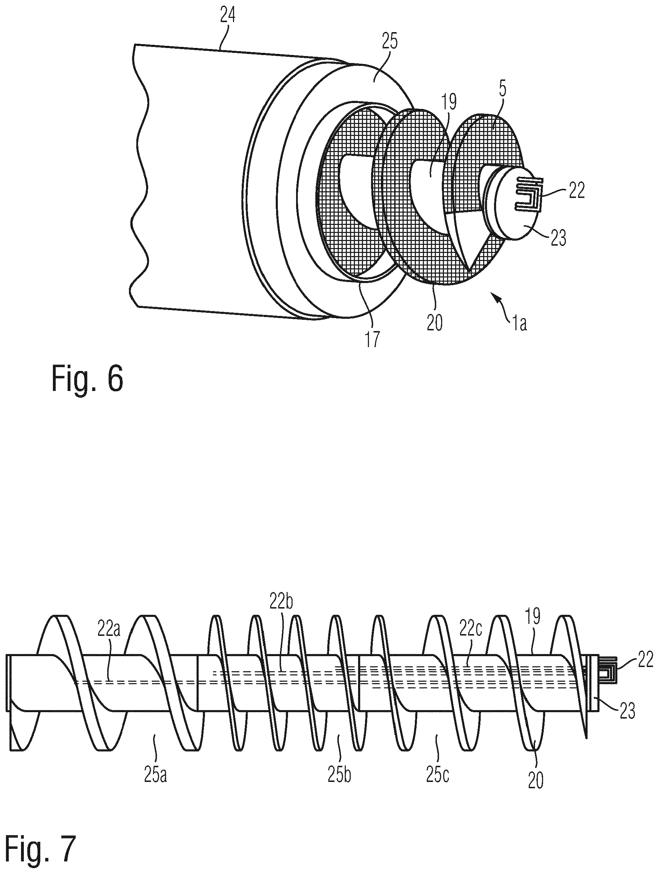

Die nachfolgenden Figuren 6 bis 8 illustrieren die insbesondere oben beschriebene Variante 2b.

Fig. 6 zeigt einen Rohrofen 1a in dreidimensionaler Ansicht, bei dem die Schneckenflügel 20 mit dem Wärmetauscher 5 gefüllt sind. Ferner befindet sich der Wärmetauscher 5 in einem Raum, der von der Rohrwandung 17 und einer Außenwand 24 gebildet wird. Ein Deckel 23 mit Rohrleitungen 22 verschließt die Schneckenwelle 19, wobei die Rohrleitungen 22 sich in die Schneckenwelle 19 erstrecken, um Heißgas darin zu transportieren.

Fig. 7 zeigt eine Seitenansicht der Vorrichtung aus Fig. 6 mit drei Schneckenabschnitte 25a, 25b und 25c, die thermisch und mechanisch einzeln über die Leitungen 22a, 22b und 22cangesteuert werden können. Dabei reicht die Leitung 22a bis zum Ende des Schneckenabschnitts 25a und die Leitung 22b bis zum Ende des Schneckenabschnitts 25b. Die dritte Leitung 22c reicht bis zum Ende des dritten Schneckenabschnitts 25c. Die vorstehend angesprochene einzelne thermische und mechanische Ansteuerbarkeit der Schneckenabschnitte 25a, 25b und 25c kann also durch unterschiedlich lange Leitungen 22a, 22b und 22c erreicht werden. Wie aus Fig. 7 erkenntlich ist, können die Schneckenflügel 20 in den unterschiedlichen Schneckenabschnitten 25a und 25b und 25c eine unterschiedliche Steigung aufweisen. Das Innere der Schneckenwelle 19 kann durch einen Deckel 23 geschlossen sein. In den Leitungen 22a, 22b und 22c kann Heißgas transportiert werden.

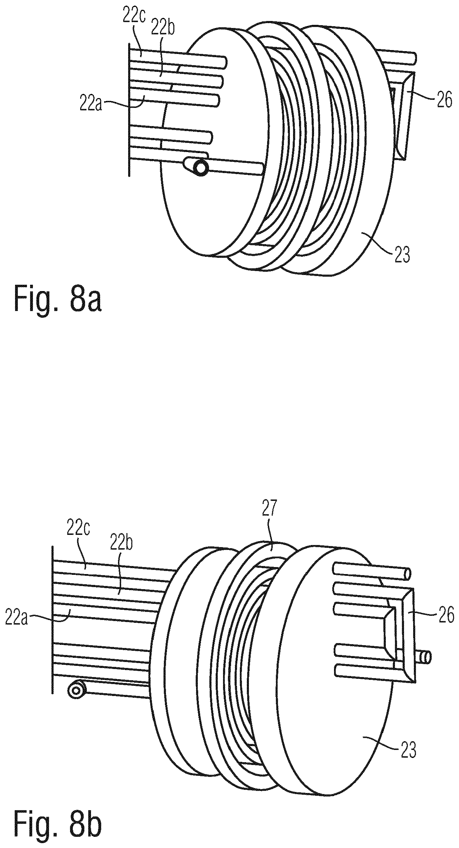

Fig. 8a und 8b zeigen aus zwei unterschiedlichen Perspektiven eine dreidimensionale Ansicht des Übergangsstücks für die Beheizung der einzelnen Schneckenabschnitte 25a, 25b und 25c, wie sie in Fig. 7 detailliert beschrieben ist. Dabei können die Leitungen 22a, 22b und 22c über Verbindungsleitungen 26 miteinander so verbunden sein, dass der Rücklauf von einem Abschnitt zum Vorlauf des anderen Abschnitts wird.

Neben den genannten Ausführungen zur Einbringung von Wärme mittels der der in dieser Erfindung beschriebenen Wärmetauscherbauart, ist auch eine Umkehrung des Prozesses bei exotherm verlaufenden Prozessen möglich. So wird in einem oder mehreren Reaktoren Wärme freigesetzt, die über die neuartigen Wärmetauscher abgeführt und nachfolgenden Prozessen zur Verfügung gestellt werden kann.

Da das Heißgas in jedem Ausführungsbeispiel in einem separaten, zum verarbeitenden Material (gas-)dicht abgeschlossenen Gang strömt, können grundlegend auch Heißgase eingesetzt werden, welche zum Beispiel aufgrund ihrer Zusammensetzung nicht mit dem zu verarbeitenden Gut in Kontakt treten dürfen.

## Patentansprüche

1. Reaktionsvorrichtung (1) mit einer ersten Wand (2), die einen Innenraum (3) definiert, in dem sich ein Rührwerk (4) befindet,
**dadurch gekennzeichnet, dass**
ein Wärmetauscher (5) an der dem Innenraum (3) abgewandten Fläche der ersten Wand (2) und/oder am Rührwerk (4) zumindest teilweise vorgesehen ist, wobei der Wärmetauscher (5) die Struktur einen Gitters aufweist und mindestens zwei die Struktur eines Gitters aufweisende Schichten vorliegen.

2. Reaktionsvorrichtung (1) nach Anspruch 1, **dadurch gekennzeichnet, dass** sie eine doppelte Wand aus der ersten Wand (2) und einer zweiten Wand (6) aufweist, so dass zwischen erster Wand (2) und zweiter Wand (6) ein Zwischenraum (7) gebildet wird, in dem der Wärmetauscher (5) vorliegt.

3. Reaktionsvorrichtung (1) nach Anspruch 2, **dadurch gekennzeichnet, dass** die Reaktionsvorrichtung (1) ein Rohrofen (1a) ist.

4. Reaktionsvorrichtung (1) nach einem der Ansprüche 1 bis 3, **dadurch gekennzeichnet, dass** das Rührwerk (4) eine Förderschnecke (18) ist, insbesondere wobei die Förderschnecke (18) Schneckenabschnitte (25a, 25b, 25c) aufweist, die unterschiedliche Steigungen haben.

5. Reaktionsvorrichtung (1) nach einem der Ansprüche 1 bis 4, **dadurch gekennzeichnet, dass** die Reaktionsvorrichtung (1) mindestens zwei Reaktionszonen (13a, 13b, 13c, 13d) mit unterschiedlichen Temperaturen aufweist.

6. Reaktionsvorrichtung (1) nach einem der Ansprüche 1 bis 5, **dadurch gekennzeichnet, dass** die Schichten des Wärmetauschers (5) an deren Berührungspunkten (8) oder - flächen miteinander verbunden sind.

7. Reaktionsvorrichtung (1) nach einem der Ansprüche 1 oder 6, **dadurch gekennzeichnet, dass** die Struktur eines Gitters ein Maschengitter umfasst oder daraus besteht, insbesondere wobei das Maschengitter eine Maschenweite von 3 mm bis 30 mm aufweist.

8. Reaktionsvorrichtung (1) nach Anspruch 7, **dadurch gekennzeichnet, dass** ein Lückenvolumenanteil des Maschengitters 90% bis 95% beträgt, und/oder dass eine Flächendichte des Maschengitters zum konvektiven Wärmetransfer von Gas auf Gitter zwischen 200 m²/m³ bis 500 m²/m³ beträgt.

9. Reaktionsvorrichtung (1) nach einem der Ansprüche 7 oder 8, **dadurch gekennzeichnet, dass** eine Kanalweite des Maschengitters zwischen 30 mm bis 150 mm beträgt.

10. Reaktionsvorrichtung (1) nach einem der Ansprüche 1 bis 9, **dadurch gekennzeichnet, dass** der Wärmetauscher (5) ein Metall, eine Metalllegierung, eine gesinterte Metallverbindung oder einen keramischen Werkstoff umfasst oder daraus besteht.

11. Reaktionsvorrichtung (1) nach einem der Ansprüche 1 bis 10, **dadurch gekennzeichnet, dass** der Wärmetauscher (5) einen Katalysator aufweist.

12. Reaktionsvorrichtung (1) nach einem der Ansprüche 1 bis 11, **dadurch gekennzeichnet, dass** der Wärmetauscher (5) als Reflektor ausgebildet ist.

13. Reaktionsvorrichtung (1) nach einem der Ansprüche 1 bis 12, **dadurch gekennzeichnet, dass** der Wärmetauscher (5) Rippen (10) aufweist.

14. Reaktionsvorrichtung (1) nach einem der Ansprüche 1 bis 13, **dadurch gekennzeichnet, dass** der Wärmetauscher (5) zusammen mit einem Isoliermaterial (16) vorliegt.

15. Verwendung der Reaktionsvorrichtung (1) nach einem der Ansprüche 1 bis 14 zum Karbonisieren, Cracken und Reformieren von Biomasse und/oder Bioreststoffen, oder zur Abführung von Wärme aus exothermen Prozessen und zur Wärmerückgewinnung, oder zur dynamischen Regelung temperaturgesteuerter Reaktorsysteme, in denen dem im Reaktor stattfindenden Prozess erst Wärme zugeführt und nach Überschreiten einer vorher festgelegten Schwelle die Wärme abgeführt wird.

## Claims

1. Reaction device (1) having a first wall (2), which defines an interior (3), which accommodates a stirring mechanism (4),
**characterized in that**
a heat exchanger (5) is at least partly provided on the surface of the first wall (2) facing away from the interior (3) and/or the stirring mechanism (4), wherein the heat exchanger (5) has a grate structure and at least two layers having a grate structure.

2. Reaction device (1) according to claim 1, **characterized in that** it has a double wall comprising the first wall (2) and a second wall (6), so that an intermediate space (7), which accommodates the heat exchanger (5), is formed between the first wall (2) and the second wall (6).

3. Reaction device (1) according to claim 2, **characterized in that** the reaction device (1) is a tube furnace (1a).

4. Reaction device (1) according to any of claims 1 to 3, **characterized in that** the stirring mechanism (4) is a screw conveyor (18), the screw conveyor having in particular screw sections (25a, 25b, 25c) with different pitches.

5. Reaction device (1) according to any of claims 1 to 4, **characterized in that** the reaction device (1) has at least two reaction zones (13a, 13b, 13c, 13d) with different temperatures.

6. Reaction device (1) according to any of claims 1 to 5, **characterized in that** the layers of the heat exchanger (5) are connected to one another at their contact points (8) or contact surfaces.

7. Reaction device (1) according to any of claims 1 or 6, **characterized in that** the structure of a grate comprises or consists of a mesh screen, the mesh screen having in particular a mesh width of 3 mm to 30 mm.

8. Reaction device (1) according to claim 7, **characterized in that** a gap volume fraction of the mesh screen is 90 % to 95 %, and/or **in that** a surface density of the mesh screen for convective heat transfer from gas to grate is between 200 m²/m³ and 500 m²/m³.

9. Reaction device (1) according to any of claims 7 or 8, **characterized in that** a channel width of the mesh screen is between 30 mm and 150 mm.

10. Reaction device (1) according to any of claims 1 to 9, **characterized in that** the heat exchanger (5) comprises or consists of a metal, a metal alloy, a sintered metal compound or a ceramic material.

11. Reaction device (1) according to any of claims 1 to 10, **characterized in that** the heat exchanger (5) includes a catalyst.

12. Reaction device (1) according to any of claims 1 to 11, **characterized in that** the heat exchanger (5) is designed as a reflector.

13. Reaction device (1) according to any of claims 1 to 12, **characterized in that** the heat exchanger (5) has fins (10).

14. Reaction device (1) according to any of claims 1 to 13, **characterized in that** the heat exchanger (5) is present together with the insulation material (16).

15. Use of the reaction device (1) according to any of claims 1 to 14 for carbonizing, cracking and reforming biomass and/or bioresidues or for removing heat from exothermic processes and for heat recovery or for the dynamic control of temperature-controlled reactor systems in which heat is first supplied to the process taking place in the reactor and the heat is dissipated after exceeding a predetermined threshold.

## Revendications

1. Dispositif de réaction (1) comprenant une première paroi (2) qui définit un espace intérieur (3) dans lequel se trouve un agitateur (4),
**caractérisé en ce que**
un échangeur de chaleur (5) est prévu au moins en partie sur la surface de la première paroi (2) détournée de l'espace intérieur (3) et/ou sur l'agitateur (4), l'échangeur de chaleur (5) présentant la structure d'une grille, et il est prévu au moins deux couches présentant la structure d'une grille.

2. Dispositif de réaction (1) selon la revendication 1,
**caractérisé en ce qu'**il comporte une double paroi constituée de la première paroi (2) et d'une deuxième paroi (6), de manière à créer un espace intermédiaire (7) entre la première paroi (2) et la deuxième paroi (6), dans lequel se trouve l'échangeur de chaleur (5).

3. Dispositif de réaction (1) selon la revendication 2,
**caractérisé en ce que** le dispositif de réaction (1) est un four tubulaire (1a).

4. Dispositif de réaction (1) selon l'une des revendications 1 à 3,
**caractérisé en ce que** l'agitateur (4) est un convoyeur à vis sans fin (18), le convoyeur à vis sans fin (18) présentent des sections de vis (25a, 25b, 25c) qui ont des pas de vis différents.

5. Dispositif de réaction (1) selon l'une des revendications 1 à 4,
**caractérisé en ce que** le dispositif de réaction (1) comporte au moins deux zones de réaction (13a, 13b, 13c, 13d) ayant des températures différentes.

6. Dispositif de réaction (1) selon l'une des revendications 1 à 5,
**caractérisé en ce que** les couches de l'échangeur de chaleur (5) sont reliées entre elles au niveau de leurs points ou surfaces de contact (8).

7. Dispositif de réaction (1) selon l'une des revendications 1 ou 6,
**caractérisé en ce que** la structure d'une grille comprend ou est constituée d'une grille à mailles, en particulier, la grille à mailles présentant une largeur de mailles de 3 mm à 30 mm.

8. Dispositif de réaction (1) selon la revendication 7,
**caractérisé en ce qu'**un taux volumique d'espacement de la grille à mailles est de 90% à 95%, et/ou
une densité surfacique de la grille à mailles pour le transfert de chaleur par convection du gaz sur la grille est comprise entre 200 m²/m³ et 500 m²/m³.

9. Dispositif de réaction (1) selon l'une des revendications 7 ou 8,
**caractérisé en ce qu'**une largeur de canal de la grille à mailles est comprise entre 30 mm et 150 mm.

10. Dispositif de réaction (1) selon l'une des revendications 1 à 9,
**caractérisé en ce que** l'échangeur de chaleur (5) comprend ou est constitué d'un métal, d'un alliage métallique, d'un composé métallique fritté ou d'un matériau céramique.

11. Dispositif de réaction (1) selon l'une des revendications 1 à 10,
**caractérisé en ce que** l'échangeur de chaleur (5) comporte un catalyseur.

12. Dispositif de réaction (1) selon l'une des revendications 1 à 11,
**caractérisé en ce que** l'échangeur de chaleur (5) est réalisé sous forme de réflecteur.

13. Dispositif de réaction (1) selon l'une des revendications 1 à 12,
**caractérisé en ce que** l'échangeur de chaleur (5) comporte des ailettes (10).

14. Dispositif de réaction (1) selon l'une des revendications 1 à 13,
**caractérisé en ce que** l'échangeur de chaleur (5) est prévu conjointement avec un matériau isolant (16).

15. Utilisation du dispositif de réaction (1) selon l'une des revendications 1 à 14 pour la carbonisation, le craquage et le reformage de la biomasse et/ou des matières résiduelles biologiques, ou pour l'évacuation de la chaleur issue de processus exothermiques et pour la récupération de chaleur, ou pour la régulation dynamique de systèmes de réacteurs à température contrôlée, dans lesquels de la chaleur est tout d'abord fournie au processus de réaction se déroulant dans le réacteur et, après dépassement d'un seuil défini préalablement, la chaleur est évacuée.
